# EUROPÄISCHE PATENTSCHRIFT

(11) **EP 2 468 484 B1**
(45) Veröffentlichungstag und Bekanntmachung des Hinweises auf die Patenterteilung: **11.02.2015**
(21) Anmeldenummer: 11010089.8
(22) Anmeldetag: 22.12.2011
(51) Int. Cl.: B29C 70/44, B29C 33/50, B29K 105/06

(54) **Verfahren zum Herstellen eines hohlen Faserverbundbauteils**
Method for producing a hollow fibre compound component
Procédé de fabrication d'un composant composite en fibres creux

(30) Priorität: 24.12.2010 DE 102010056293
(43) Veröffentlichungstag der Anmeldung: 27.06.2012
(73) Patentinhaber: Munich Composites GmbH, 85521 Ottobrunn (DE)
(72) Erfinder: Rüger, Olaf, 85570 Markt Schwaben (DE); Fröhlich Felix, 85774 Unterföhring (DE); Wachter, Florian, 80805 München (DE)
(74) Vertreter: Winter, Brandl, Fürniss, Hübner, Röss, Kaiser, Polte - Partnerschaft mbB

(56) Entgegenhaltungen:
- EP-A2- 0 491 650
- EP-A2- 2 402 134
- DE-A1- 2 124 789
- FR-A- 1 418 114
- US-A- 4 684 423
- US-A- 5 259 901
- LEHMANN U ET AL: "Cores lead to an automated production of hollow composite parts in resin transfer moulding", COMPOSITES, IPC BUSINESS PRESS LTD. HAYWARDS HEATH, GB, vol. 29, no. 7, 1 January 1998 (1998-01-01), pages 803-810, XP004129067, ISSN: 0010-4361, DOI: 10.1016/S1359-835X(98)00007-4

## Beschreibung

Die Erfindung betrifft unter anderem ein Verfahren zum Herstellen eines hohlen Faserverbundbauteils mit in Harz eingebetteten Verstärkungsfasern.

Faserverbundwerkstoffe bieten aufgrund ihrer hohen spezifischen Eigenschaften großes Leichtbaupotenzial. Vor allem in der Luft- und Raumfahrtindustrie werden kohlefaserverstärkte Werkstoffe seit Jahrzehnten eingesetzt. Mit der steigenden Marktnachfrage des letzten Jahrzehnts sind Verstärkungsfasern preislich auch für den Maschinen- und Anlagenbau sowie für den Automobilbereich interessant geworden. Eine Motivation für den Einsatz dieses neuen Werkstoffes sind vor allem die hohen mechanischen Belastbarkeitseigenschaften von Faserverbundwerkstoffen bei gleichzeitig geringer Dichte.

So können Strukturen leichter gebaut und somit effizienter genutzt werden. Im klassischen Leichtbau werden, aufgrund der hohen spezifischen Flächenträgheitsmomente, meist Hohlprofile eingesetzt. Die Anzahl der Hohlprofile an den gesamt hergestellten Faserverbundbauteilen beträgt ca. 50 %.

Komplex geformte Hohlbauteile werden heute meist in zweischaliger Bauweise gefertigt und später verklebt. Beispiele hierfür sind in großer Zahl im Automobilbereich oder auch bei der Fertigung von Booten oder Blättern von Windenergieanlagen zu finden. Problematisch ist jedoch dabei die Durchtrennung oder Nicht-Durchgängigkeit der lasttragenden Fasern. Die positiven Eigenschaften der Fasern können so nicht voll ausgeschöpft werden, was zu höherem Gewicht und geringerer Dauerfestigkeit führt.

Werden Hohlbauteile integral, in einem Stück gefertigt, stellt sich immer die Frage nach einem passenden Kernkonzept. Bei einfach geformten Bauteilen finden meist feststehende Kerne Einsatz. Diese Kerne können durch den Einsatz von Entformungsschrägen und thermischem Schrumpf vom Bauteil getrennt und ausgelöst werden. Bei komplexeren Geometrien, insbesondere solchen, die Hinterschnitte und Krümmungen aufweisen, ist allerdings die Auslösung des Kernes nicht ohne weiteres möglich. Da in der faserverbundverarbeitenden Industrie jedoch vor allem komplexe Bauteile benötigt werden, stellt sich bei der Fertigung von Hohlbauteilen aus Faserverbundwerkstoffen immer die Frage nach einem passenden Kernkonzept. Dieser Kern muss den Anforderungen genügen, eine Maßhaltigkeit im Bereich von < 0,1 % ausweisen, eine ausreichende Stabilität, die Möglichkeit zur automatisierten Verarbeitung bieten, wiederverwendbar sein, geringe Kosten hervorrufen, die Darstellung von komplexen Geometrien ermöglichen und die Möglichkeit einer Nachkompaktierung haben.

Grundsätzlich werden unterschiedliche Kernkonzepte nach deren Auslösbarkeit oder deren Verbleiben in den Faserverbundteilen unterschieden. Die auslösbaren Kerne werden weiter unterschieden in direkt wiederverwendbare, wiederverwendbare nach einer Aufbereitung und verlorene Kerne.

Als verbleibende Kerne werden Strukturschäume und nicht strukturelle Schäume häufig verwendet. Unter direkt wiederverwendbaren und auslösbaren Kernen werden feststehende Kerne aus Leichtmetallen oder eisenhaltigen Legierungen, aufblasbare Schläuche oder Vollmaterialen eingesetzt. Unter wiederverwendbaren Kernen, die jedoch eine Aufbereitung benötigen, werden Sandkerne, Wachse, niederschmelzende Kunststoffe und niederschmelzende Metalllegierungen zusammengefasst. Zu den auslösbaren aber verlorenen Kernen zählt man z.B. "Aquacore" und aufblasbare Materialien oder aufblasbare Kerne aus PET .

Bei verbleibenden Kernen handelt es sich ausschließlich um Einwegkerne. Das heißt, für ein Bauteil wird ein Kern benötigt, wobei sich keine Möglichkeiten einer Wiederverwendung des Kernes und des Kernmaterials ergeben. Strukturschäume haben hierbei den Vorteil, dem Endprodukt zu mehr Steifigkeit oder Festigkeit zu verhelfen, wobei sie den Nachteil haben, spanend hergestellt werden zu müssen. Die nichtstrukturellen Schäume können dagegen recht kostengünstig in Urformen gegossen und ausgehärtet werden. Das zusätzlich eingebrachte Gewicht verringert hierbei oft die Vorteile gegenüber metallischen Werkstoffen und die aufwändige und teure Herstellung der Kerne ist für Großserien ungeeignet oder führt zu erheblichen Preissteigerungen am Endprodukt.

Die verlorenen Kerne verhalten sich ähnlich wie verbleibende Kerne, da sie ebenfalls Einwegkerne sind, allerdings mit dem Vorteil, nach dem Aushärten des Bauteils keine Kernrückstände mehr zurückzulassen. Auswaschbare Materialien, wie z. B. "Aquacore", stellen besondere Ansprüche an die Kernherstellung und können mit derzeit ungefähr 20 Euro pro Liter beträchtliche Mehrkosten in einer Serienfertigung verursachen. Aufblasbare Kerne auf z.B. PET-Basis sind dünnwandige Kerne, die ähnlich wie eine Getränkeflasche bei anliegendem Innendruck formstabil sind. Für große Stückzahlen werden diese Kerne sehr billig, haben jedoch den Nachteil, sehr ungenau zu sein und eine schlechte Temperaturbeständigkeit zu besitzen. Auslösbare Kerne, deren Material nach dem Entfernen aus dem Bauteil wiederverwendet werden kann, basieren oft auf aus der Gusstechnik bekannten Sandformen, niedrigschmelzenden Kunststoffen oder Metallen. Hier befindet sich das Kernmaterial jeweils in einem geschlossenen Kreislauf und dient nach dem Entfernen wieder als Ausgangsmaterial für neue Kerne.

Direkt wiederverwendbare Kerne aus soliden Materialien benötigen Formschrägen, ähnlich wie beim Gießen. Mit dieser Technik sind jedoch keine Hinterschnitte realisierbar und lediglich mit weicheren Materialien können minimale Hinterschnitte umgesetzt werden.

So offenbart die DE 19802855 ein Verfahren und ein Formwerkzeug zur Herstellung von Kunststoff-Formteilen. Das Verfahren betrifft dabei die Herstellung von hohlen, schalenförmigen oder flächigen Kunststoff-Formteilen mit geringem Eigengewicht, aber hoher Stabilität. Der in ein Formwerkzeug eingesetzte Erzeugnisrohling härtet durch Wärmeeinwirkung aus. Als Ausgangsmaterial wird ein elektrisch leitendes, thermoplastisches Composit-Gewebe verwendet, das im Formwerkzeug konduktiv oder induktiv erhitzt wird und nach einer Abkühl-/Erstarrungsphase dem Formwerkzeug als ausgehärtetes Erzeugnis entnehmbar ist. Ein sog. Vorderbau des Formwerkzeuges ist aus Silikon gefertigt. Zur Herstellung von hohlen Erzeugnissen wird über einen Silikonschlauch ein Composit-Strumpf gezogen und im Formwerkzeug der Schlauch mit Druckluft aufgeblasen. Mit Einlagen bzw. Aussparungen im Formwerkzeug lassen sich integrierte flexible Bereiche im Composit-Gewebe erhalten.

Allerdings weist dieses Verfahren und das entsprechende Formwerkzeug den Nachteil auf, dass bei komplexen Geometrien eine zu große Verformung des Formwerkzeuges stattfindet und somit Ungenauigkeiten des Faserverbundbauteils auftreten.

Benachbarter Stand der Technik ist aus der DE 10 2008 023 629 A1, der DE 10 2009 002 232 A1, der DE 10 2008 016 616 A1, der DE 10 2008 021 294 A1, der EP 0 491 650 A2, der US 5,259,901 A, der US 4,684,423 A, der FR 1418114 A, der DE 21 24 789 A1 und der EP 2 402 134 A2 bekannt.

Die EP 0 491 650 A2 offenbart eine Hartspritzpressvorrichtung zum Herstellen eines faserverstärkten Verbundgegenstandes, mit zwei Formwerkzeughälften, die längs einer Dichtfläche zusammenpassen, um dadurch einen Formwerkzeughohlraum zu bilden, der die Oberflächen eines komplexen, faserverstärkten Verbundgegenstands festlegt, wobei eine der Formwerkzeughälften zum Auflegen der Faserverstärkung auf dieselbe vorgesehen ist, wobei ferner die eine der Formwerkzeughälften eine nachgiebige und variable starre Vorrichtung ist, die eine elastomere Schicht aufweist, welche der gewünschten Form des Gegenstandes im Wesentlichen angepasst ist; und dass eine Einrichtung vorgesehen ist, zum Übertragen von Fluiddruck zum Abstützen der nachgiebigen Formwerkzeughälfte, wobei diese Einrichtung ein Material aufweist, das in der Lage ist, Fluiddruck hinter der nachgiebigen Formwerkzeughälfte zu liefern, um die nachgiebige Formwerkzeughälfte abzustützen, eine Membrane, die Druck aus einer externen Quelle auf das Material überträgt, und ein Reservoir, welches das Material aufnimmt, wenn die Form nicht starr gemacht wird, um das Auflegen, Formen und Entfernen des Verbundgegenstandes zu erleichtern.

Die US 5,259,901 betrifft lediglich einen aufblasbaren Dorn, der einzelne Elastomerschichten aufweist.

Es ist daher die Aufgabe der vorliegenden Erfindung, einerseits die Präzision zur Herstellung eines Faserverbundbauteiles zu erhöhen, gleichzeitig jedoch aber die Kosten für die Herstellung eines Faserverbundbauteils zu minimieren.

Diese Aufgabe wird durch ein Verfahren nach Anspruch 1 gelöst.

Dadurch können auf einfache und effiziente Weise Bauteile mit konkaven Bereichen hergestellt werden.

Im Besonderen wird diese Aufgabe dadurch gelöst, dass einzelne Schritte dem Verfahren zugrunde liegen, nämlich:
a) ein Schritt, bei dem eine verlorene Ausgangsform mit zumindest einer Lage aus ersten Verstärkungsfasern umgeben wird,
b) ein Schritt, bei dem die ersten Verstärkungsfasern mit einem elastischen Dichtmittel unlösbar bedeckt werden, um einen wiederverwendbaren, schlauchartigen Formkörper auszubilden, so dass die Ausgangsform in einem unter Druck setzbaren Druckraum des Formkörpers befindlich ist,
c) ein Schritt, bei dem eine Druckmittelleitung an einer verbleibenden Öffnung des Formkörpers abgedichtet eingesetzt ist,
d) ein Schritt, bei dem die Ausgangsform entfernt wird,
e) ein Schritt, bei dem der Formkörper durch ein Zuführen von einem Druckmittel über die Druckmittelleitung in den Druckraum bis zu einem ersten vorbestimmten Druckwert aufgepumpt wird,
f) ein Schritt, bei dem der aufgepumpte Formkörper mit zumindest einer Lage zweiter Verstärkungsfasern umgeben wird,
g) ein Schritt, bei der der mit den zweiten Verstärkungsfasern bedeckte Formkörper in eine mehrteilige Form eingelegt wird, die die Außenkontur des Faserverbundbauteils festlegt,
h) ein Schritt, bei dem ein Harz in die die zweiten Verstärkungsfasern umschließende Form eingebracht wird und der Druck im Druckraum des Formkörpers zum Zeitpunkt des Harz-Zuführens höher ist, als der erste Druckwert,
i) ein Schritt, bei der die Temperatur so lange erhöht wird, bis das Harz ausgehärtet ist, und
j) ein Schritt, bei der der Druck aus dem Formkörper abgelassen wird, die Form geöffnet wird, das Faserverbundbauteil aus der Form genommen wird und der Formkörper aus dem die zweiten Verstärkungsfasern beinhaltenden Faserverbundbauteil herausgenommen wird.

Unter Zuhilfenahme des benutzten Formkörpers, wird das nächste Faserverbundbauteil hergestellt. Nach Schritt j) folgt also wiederSchritt d). Besonders dünnwandige Faserverbundbauteile lassen sich dadurch erzielen.

Die Schritte müssen nicht zwangsweise in der angegeben Abfolge ablaufen; insbesondere gilt dies bzgl. Schritt j).

Vorteilhafte Ausführungsformen sind in den Unteransprüchen beansprucht und werden nachfolgend näher erläutert.

Der Formkörper oder faserverstärkte Aufblaskern wird vorteilhafterweise aufgeblasen, bis er eine zumindest abschnittsweise konvexe Form aufweist, er wird dann mit Fasern belegt oder beflochten, wobei danach der Druck abgelassen wird, konvexe Bereiche eingedrückt werden, wobei danach der Kern mit einem Preform in eine RTM-Form eingelegt wird, diese Form verschlossen wird, der Aufblaskern wieder mit Druck beaufschlagt wird, Harz infiltriert wird und das Harz danach aushärtet.

Ferner ist es von Vorteil, wenn zumindest einige oder alle der Schritte a) bis i) in dieser Reihenfolge, zeitlich nacheinander durchgeführt werden.

Auch ist es von Vorteil, wenn als elastisches Dichtmittel ein Elastomer verwendet wird. Durch die gummiartigen Eigenschaften des Elastomers, kann einerseits der Druckverlust beim Aufpumpen des Formkörpers vermieden werden, andererseits aber ein Ausdehnen, soweit dies die ersten Verstärkungsfasern zulassen, ermöglicht werden.

Als besonders vorteilhaft hat es sich herausgestellt, wenn als erstes Dichtmittel Silikon verwendet wird. Silikon ist besonders kostengünstig zu erstehen und gut zu verarbeiten.

Besonders formstabile, langlebige und präzise Formkörper lassen sich erreichen, wenn die ersten und/oder zweiten Verstärkungsfasern so angeordnet werden, dass sie jeweils eine Faserlage nach Art eines Gewebes oder eines Geflechts binden.

Wenn die ersten und/oder zweiten Verstärkungsfasern jeweils eine Faserlage bilden, wobei die jeweilige Faserlage aus drei einzelnen Verstärkungsfaserlagen aufgebaut wird, so können besonders steife Formkörper bedarfsspezifisch mit unterschiedlichen Geometrien und Belastungsverhalten erzielt werden.

Es ist ferner von Vorteil, wenn das Harz mit einem zweiten Druck zugeführt wird, der niedriger als der Druck im Druckraum des Formkörpers zum Zeitpunkt des Harz-Zuführens ist.

Um einen besonders großen Anwendungsbereich für die Faserverbundbauteile erschließen zu können, ist es von Vorteil, wenn die Ausgangsform, der Formkörper und das Faserverbundbauteil eine komplexe Geometrie mit sich änderndem Querschnitt in deren/dessen Längserstreckung und/oder einen oder mehrere Hinterschnitte aufweist.

Ein besonders gutes Verhältnis zu Steifigkeit und Gewicht stellt sich ein, wenn die ersten und/oder zweiten Verstärkungsfasern aus der Gruppe der Kohlefasern, Aramidfasern und Glasfasern entnommen sind. Außerdem sind alle anderen synthetischen Fasern und Naturfasern verwendbar.

Von Vorteil ist es ferner, wenn das Harz ein duroplastisches oder thermoplastisches Harz ist. Auf diese Weise kann auf die speziellen Beanspruchungen des Faserverbundbauteils effizient eingegangen werden.

Wenn der erste Druckwert zwischen 0,5 bar und 1,25 bar liegt, vorzugsweise ungefähr 0,8 bar ist und/oder der Druck im Druckraum bei der Harzzuführung ca. 6 bar bis 100 bar, vorzugsweise 35 bar, beträgt, so lässt sich ein einfaches Bewegen des Formkörpers mit nachfolgender Erzielung eines dünnwandigen Faserverbundbauteils erreichen.

Es ist auch von Vorteil, wenn unmittelbar vor oder während des Schrittes i) der Druckraum an eine Vakuumquelle angeschlossen wird. Dann lässt sich der Formkörper aus dem Roh-Faserverbundbauteil einfacher entnehmen.

Die Erfindung betrifft auch einen Formkörper mit einer nahezu allseitig geschlossenen, aufpumpbaren Elastomerhülle, die zumindest an einer Stelle eine, eine Zu- und/oder Abfuhr eines Druckmittels ermöglichende Öffnung aufweist, wobei die Elastomerhülle unlösbar mit einer Lage aus ersten Verstärkungsfasern verbunden ist, der Formkörper eine komplexe Profilgeometrie aufweist.

Die Erfindung betrifft auch einen Formkörper dieser Art, zum Ausformen eines Faserverbundbauteils. Zwar sind Formkörper allgemeiner Natur bereits aus der US 1842652 und der US 2308268 bekannt, doch werden diese lediglich zur Reparatur von Reifen im Rahmen einer Vulkanisation eingesetzt.

Auch hier ist es die Aufgabe, die Nacheile aus dem Stand der Technik zu vermeiden und einen wiederverwertbaren Kern zur Verfügung zu stellen, der ohne Aufbereitung wiederverwendbar ist, aber eine hohe Präzision bei gleichzeitig niedrigen Kosten bietet und die Fertigung von vielseitig einsetzbaren Faserverbundteilen ermöglicht

Dies wird dadurch gelöst, dass die ersten Verstärkungsfasern eine Faserlage bilden, die aus drei einzelnen Verstärkungsfaserrichtungen aufgebaut sind.

Wenn der Formkörper hohl ausgestaltet ist und zumindest einen Hinterschnitt auf seiner Außenseite aufweist, lassen sich besonders einfach solche komplexen Geometrien realisieren.

Vorteilhafterweise ist die Elastomerhülle so ausgebildet, dass sie Silikon umfasst und einen Formkörper ausbildet.

Es wird hier ein faserverstärkter Aufblaskern zur Verfügung gestellt, der den spezifischen Anforderungen des automatisierbaren Prozesses zur Herstellung von Faserverbundhohlbauteilen angepasst ist. Dabei wird der Nachteil vermieden, dass das Formteil nicht formstabil ist, wenn es einfach aufgeblasen wird, wodurch die Maßhaltigkeit sich sonst verschlechtern würde. Es wird ein Konzept vorgestellt, das die Maßhaltigkeit der Kontur des letztendlichen Faserverbundbauteils verbessert, wobei eine für den Prozess ausreichende Festigkeit und Steifigkeit des Aufblaskerns vorgehalten wird. Nach Entnahme und kurzer Überprüfung des Aufblaskerns nach Fertigstellung des Faserverbundbauteils ist dieser sofort wieder einsatzfähig, anders als bei bekannten Blaskernen aus Thermoplasten, wie PE, PA, oder Sand sowie anderen ausscheidbaren Kernen. Das Belegen des Formkörpers im biegeschlaffen, nicht maßhaltigen Zustand wird verhindert. Stattdessen wird eine formgetreue, maßhaltige und effiziente Vorgehensweise ermöglicht.

Es ist bekannt, dass der vorgestellte faserverstärkte Aufblaskern noch mehr Vorteile hat. Einer ist, dass sich der Kern bei eckigen Bauteilen beim Bedrucken in ein runde oder zumindest konkave Form aufbläst. Das wird dann auch so gemacht und beim Einlegen in die geschlossene Außenform wird der Kern mit der Preform wieder eckig. Ein großer Vorteil ist ferner, dass die Faserablage beim Beflechten von eckigen Kernen, vor allem rechteckigen Kernen, von der gewünschten abweicht. Ein sogenannter S-Schlag tritt auf. Im runden Zustand ist die Ablage schön gleichmäßig. Ein weiterer Vorteil ist, dass man auch Bauteile mit konkaven Bereichen auf einfache Weise herstellen kann, d.h.: Kern aufblasen, konkaver Bereich wird konvex, Kern so beflechten, danach Luft ablassen, konkaver Bereich lässt sich eindrücken, in geschlossene Form legen und wieder bedrucken.

Die Erfindung wird nachfolgend auch mit Hilfe einer Zeichnung näher erläutert. In dieser Zeichnung wird eine erste Ausführungsform beschrieben. Es zeigen:
- Fig. 1: eine Ausführungsform in perspektivischer Darstellung,
- Fig. 2: einen Formkörper aus ersten Verstärkungsfasern mit diese umgebendem elastischem Dichtmittel, wobei im Inneren des Formkörpers die Ausgangsform enthalten ist,
- Fig. 3: der auf allen Seiten geschlossene Formkörper mit nur an einer Seite eingesetzter Druckmittelleitung,
- Fig. 4: einen mit zweiten Verstärkungsfasern umgebenen aufgepumpten Formkörper,
- Fig. 5: einen Schnitt entlang der Linie V aus Figur 4,
- Fig. 6: einen Schnitt durch eine mehrteilige Form, in der der mit den zweiten Verstärkungsfasern bedeckte Formkörper eingelegt ist, um mit Harz infiltriert zu werden,
- Fig. 7: das fertige Faserverbundbauteil in perspektivischer Ansicht wie bei den Fig. 1 bis 4.

Die Figuren sind lediglich schematischer Natur und dienen ausschließlich dem Verständnis der Erfindung.

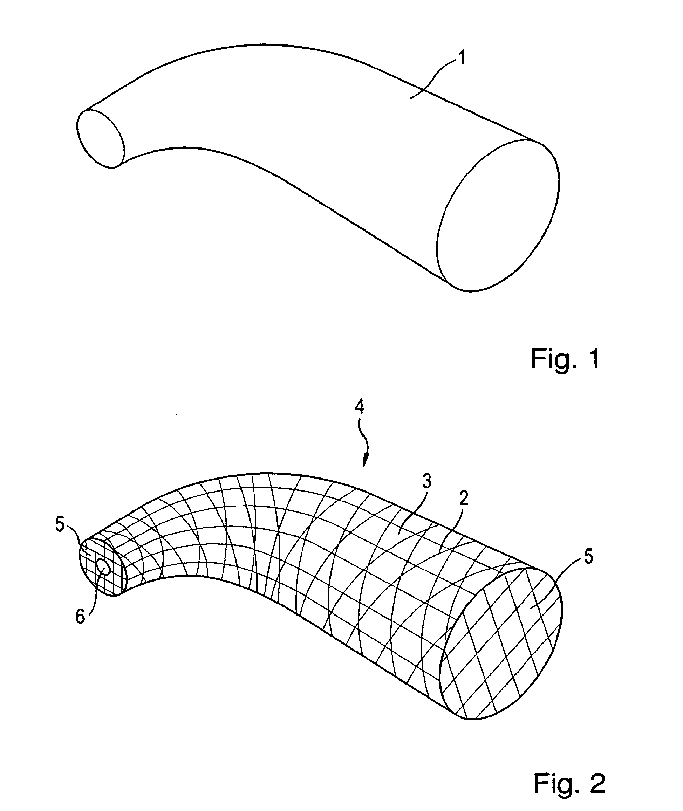

In Fig. 1 ist eine Ausgangsform 1 dargestellt. Diese Ausgangsform ist als verlorener auslösbarer Kern ausgebildet, bspw. aus Sand gebildet und auf der Außenseite von einer Folie aus Kunststoff umhüllt. Diese Folie ist optional.

In einem ersten Schritt wird die verlorene Ausgangsform 1 mit zumindest einer Lage aus ersten Verstärkungsfasern 2 umgeben. Diese ersten Verstärkungsfasern 2 sind in Fig. 2 schematisch dargestellt.

In einem nachfolgenden zweiten Schritt werden die ersten Verstärkungsfasern 2 mit einem elastischen Dichtmittel unlösbar bedeckt. Als elastisches Dichtmittel wird ein Silikon 3 eingesetzt, das mit dem Bezugszeichen 3 gekennzeichnet ist. Das elastische Dichtmittel, hier Silikon 3 kann so aufgetragen werden, dass die ersten Verstärkungsfasern 2 auf der inneren Oberfläche, der äußeren Oberfläche, oder zwischen diesen beiden Oberflächen befindlich sind. In einer Variante hat es sich als vorteilhaft herausgestellt, wenn die ersten Verstärkungsfasern 2 immer zwischen den beiden Oberflächen alternieren.

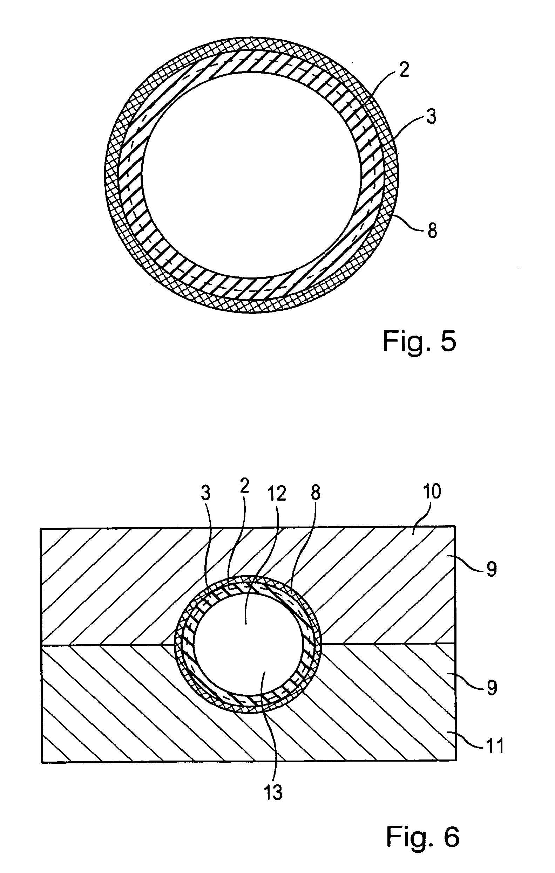

In Fig. 5 ist das etwa mittige Anordnen der strumpf- oder schlauchförmigen Lage aus ersten Verstärkungsfasern 2 in Silikonmaterial 3 dargestellt.

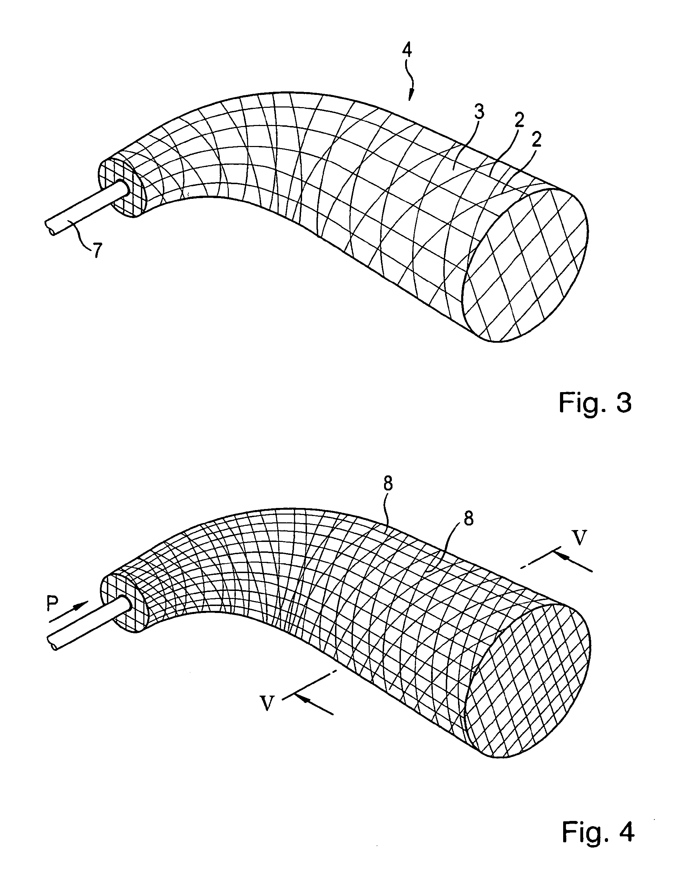

Die ersten Verstärkungsfasern 2 werden so angeordnet, dass sie einen schlauchartigen Formkörper 4 ausformen. Dieser Formkörper 4 umhüllt die Ausgangsform 1 und ist an seinen Stirnseiten 5 geschlossen ausgebildet, wobei mindestens eine Öffnung 6 frei bleibt, in der in einem separaten, vorzugsweise nachfolgenden Schritt, eine Druckmittelleitung 7 eingesetzt ist. Die Druckmittelleitung 7 ist in Fig. 3 dargestellt.

Für die Weiterverarbeitung wird jetzt die Ausgangsform 1 entfernt. Allerdings ist es möglich, die Ausgangsform 1 vorher oder aber auch später zu entfernen.

Die Druckmittelleitung 7 ist in einer abgedichteten Weise in dem Formkörper 4 eingesetzt.

Im nächsten Schritt wird in den Formkörper 4 durch die Druckmittelleitung 7 ein Druckmittel, wie z.B. Luft, oder eine Flüssigkeit eingeleitet, so dass der Formkörper 7 bis zu einem vorbestimmten Druckwert aufgepumpt wird. das Aufpumpen ist mit dem Pfeil P symbolisiert, da durch das Zuführen des Druckmittels auch der Druck im Inneren des Formkörpers 4 ansteigt.

In dem in Fig. 5 dargestellten Schnitt durch den Formkörper 4 ist die relative Anordnung der ersten Verstärkungsfasern 2 relativ zum Silikon 3 zu erkennen.

In einem nachfolgenden Schritt wird der nun aufgepumpte Formkörper 4 mit zumindest einer Lage der zweiten Verstärkungsfasern 8 umgeben.

Sowohl die ersten Verstärkungsfasern 2, als auch die zweiten Verstärkungsfasern 8 sind nach Art eines Geflechts oder eines Gewebes angeordnet. Dabei werden vorzugsweise zumindest drei erste Verstärkungsfasern 2 oder zumindest drei zweite Verstärkungsfasern 8 in eine schlauch- oder strumpfförmige Form gebracht. Das Bauteil weist dann mindestens eine Verstärkungsfaserrichtung auf. Auch sind andere Verfahren, wie Wickeln, Legen, Flechten in automatisierter Art oder auch per Handverfahren denkbar.

Dadurch wird ein Schicht- bzw. Lagenaufbau gemäß Fig. 5 erreicht. Die äußerste Schicht wird somit durch die Verstärkungsfasern 8 gebildet, die nun lediglich noch mit Harz infiltriert und nachfolgend ausgehärtet werden müssen.

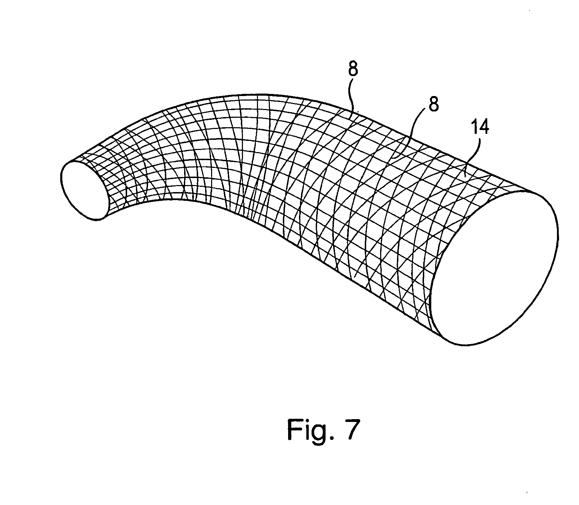

In einem nachfolgenden Schritt wird daher der mit den zweiten Verstärkungsfasern 8 bedeckte Formkörper 4 in eine mehrteilige Form 9 eingelegt. Die Form 9 weist ein Oberteil 10 und ein Unterteil 11 auf. Das Oberteil 10 und das Unterteil 11 haben auf den ihnen zugewandten Seiten Ausnehmungen, die derart miteinander korrespondieren, dass sie die Außenkontur des zu erzeugenden Faserverbundbauteils 14, wie es in Fig. 7 dargestellt ist, vorbestimmen. Das Faserverbundbauteil 14 ist hohl und kann an den distalen Enden offen sein.

Über nicht dargestellte Versorgungsschächte oder Leitungen wird Harz unter Druck in einen Innenraum 12, der durch das Oberteil 10 und das Unterteil 11 gebildeten Form 9 geleitet. Das Harz kann dabei nicht das Silikon 3 durchdringen und durchdringt lediglich die zweiten Verstärkungsfasern 8.

Sobald der Schritt des Harz-Einbringens in die umschließende Form 9 beendet ist, wird die Temperatur so lange erhöht, bis das Harz aushärtet. Es sei darauf hingewiesen, dass das Harz mit einem unwesentlich geringeren Druck zugeführt wird, als er im Innenraum 12, insbesondere im Inneren des Formkörpers 4, also in einem Druckraum 13 vorliegt.

Die Temperatur wird so lange auf einem Niveau gehalten, dass das Harz aushärtet.

Danach wird die Temperatur auf ein adäquates, für die Verarbeitung geeignetes Niveau abgesenkt, der Druck aus dem Druckraum 13 wieder auf Umgebungsniveau gesenkt, oder sogar darunter gesenkt, bspw. durch ein Anlegen einer Vakuumquelle, so dass nach Abnehmen des Oberteils 10 vom Unterteil 11, der Formkörper 4 aus dem Inneren des Faserverbundbauteils 14 entnommen werden kann. Der schlaffe Formkörper 4 wird aus dem Faserverbundbauteil herausgezogen.

Die durch die ersten oder zweiten Verstärkungsfasern 2 und 8 gebildeten Lagen, sind als Geflecht oder Gewebe ausgebildet. Insbesondere hat sich die Verwendung von Flechtvorrichtungen dazu bewährt.

Als Harz wird ein thermoplastisches oder duroplastisches Harz verwendet. Die ersten und/oder zweiten Verstärkungsfasern sind vorzugsweise als Kohlefasern ausgebildet. Allerdings sind auch Aramidfasern oder Glasfasern denkbar, sowie Kombinationen dieser Fasern. Insbesondere sind im vorliegenden Ausführungsbeispiel pro Lage drei einzelne dieser Fasern verwendet.

## Patentansprüche

1. Verfahren zum Herstellen eines hohlen Faserverbundbauteils (14) mit in Harz eingebetteten Verstärkungsfasern (8), mit einzelnen Schritten:
a) bei dem eine verlorene Ausgangsform (1) mit zumindest einer Lage aus ersten Verstärkungsfasern (2) umgeben wird,
b) bei dem die ersten Verstärkungsfasern (2) mit einem elastischen Dichtmittel unlösbar bedeckt werden, um einen wiederverwendbaren, schlauchartigen Formkörper (4) auszubilden, so dass die Ausgangsform (1) in einem unter Druck setzbaren Druckraum (13) des Formkörpers (4) befindlich ist,
c) bei dem eine Druckmittelleitung (7) an mindestens einer verbleibenden Öffnung (6) des Formkörpers (4) abgedichtet eingesetzt ist,
d) bei dem die Ausgangsform (1) entfernt wird,
e) bei dem der Formkörper (4) durch ein Zuführen von einem Druckmittel über die Druckmittelleitung (7) in den Druckraum (13) bis zu einem ersten vorbestimmten Druckwert aufgepumpt wird,
f) bei dem der aufgepumpte Formkörper (4) mit zumindest einer Lage zweiter Verstärkungsfasern (8) umgeben wird,
g) bei dem der mit den zweiten Verstärkungsfasern (8) bedeckte Formkörper (4) in eine mehrteilige Form (9) eingelegt wird, die die Außenkontur des Faserverbundbauteils (14) festlegt,
h) bei dem ein Harz in die die zweiten Verstärkungsfasern (8) umschließende Form (9) eingebracht wird und der Druck im Druckraum (13) des Formkörpers (4) zum Zeitpunkt des Harz-Zuführens höher ist, als der erste Druckwert,
i) bei der die Temperatur so lange erhöht wird, bis das Harz aushärtet und
j) ein Schritt, bei der der Druck aus dem Formkörper (4) abgelassen wird, die Form geöffnet wird, das Faserverbundbauteil (14) aus der Form (9) genommen wird und der Formkörper (4) aus dem die zweiten Verstärkungsfasern (8) beinhaltenden Faserverbundbauteil (14) herausgenommen wird.

2. Verfahren nach Anspruch 1, **dadurch gekennzeichnet, dass** zumindest einige oder alle der Schritte a) bis j) in dieser Reihenfolge zeitlich nacheinander durchgeführt werden.

3. Verfahren nach Anspruch 1 oder 2, **dadurch gekennzeichnet, dass** als elastisches Dichtmittel ein Elastomer verwendet wird.

4. Verfahren nach Anspruch 3, **dadurch gekennzeichnet, dass** als elastisches Dichtmittel Silikon (3) verwendet wird.

5. Verfahren nach einem der Ansprüche 1 bis 4, **dadurch gekennzeichnet, dass** die ersten und/oder zweiten Verstärkungsfasern (2, 8) so angeordnet werden, dass sie jeweils eine Faserlage nach Art eines Gewebes oder eines Geflechts bilden.

6. Verfahren nach einem der Ansprüche 1 bis 5, **dadurch gekennzeichnet, dass** die ersten Verstärkungsfasern (2) jeweils eine Faserlage bilden, die aus mindestens drei einzelnen Verstärkungsfaserrichtungen (2) aufgebaut sind.

7. Verfahren nach einem der Ansprüche 1 bis 6, **dadurch gekennzeichnet, dass** das Harz mit einem zweiten Druck zugeführt wird, der niedriger als der Druck im Druckraum (13) des Formkörpers (4) zum Zeitpunkt des Harz Zuführens ist.

8. Verfahren nach einem der Ansprüche 1 bis 7, **dadurch gekennzeichnet, dass** die Ausgangsform (1), der Formkörper (4) und das Faserverbundbauteil (14) in eine komplexe Geometrie mit sich änderndem Querschnitt in deren/dessen Längserstreckung und/oder einen oder mehrere Hinterschnitte aufweisend gebracht wird.

9. Verfahren nach einem der Ansprüche 1 bis 8, **dadurch gekennzeichnet dass** die ersten und/oder zweiten Verstärkungsfasern (2; 8) aus der Gruppe der Kohlefasern, Aramidfasern und Glasfasern entnommen sind.

10. Verfahren nach einem der Ansprüche 1 bis 9, **dadurch gekennzeichnet, dass** das Harz ein duroplastisches oder thermoplastisches Harz ist.

11. Verfahren nach einem der Ansprüche 1 bis 10, **dadurch gekennzeichnet, dass** der erste Druckwert zwischen 0,5 bar und 1,25 bar liegt, vorzugsweise ungefähr 0,8 bar ist und/oder der Druck im Druckraum (13) bei der Harz-Zuführung ca. 6 bar bis 100 bar, vorzugsweise 35 bar beträgt.

12. Verfahren nach einem der Ansprüche 1 bis 11, **dadurch gekennzeichnet, dass** unmittelbar vor oder während des Schrittes j) der Druckraum (13) an eine Vakuumquelle angeschlossen wird.

## Claims

1. A method for producing a hollow composite fibre component (14) comprising reinforcing fibres (8) embedded in resin, comprising individual steps:
a) in which an expendable starting mould (1) is surrounded with at least one layer of first reinforcing fibres (2),
b) in which the first reinforcing fibres (2) are permanently covered with a resilient sealant in order to form a reusable, tube-type shaped article (4) so that the starting mould (1) is located in a pressure chamber (13), which can be placed under pressure, of the shaped article (4),
c) in which a pressure medium line (7) is installed in a sealed manner on at least one remaining opening (6) of the shaped article (4),
d) in which the starting mould (1) is removed,
e) in which the shaped article (4) is pumped up to a first predetermined pressure value by supplying a pressure medium into the pressure chamber (13) via the pressure medium line (7),
f) in which the pumped-up shaped article (4) is surrounded with at least one layer of second reinforcing fibres (8),
g) in which the shaped article (4) covered with the second reinforcing fibres (8) is inserted into a split mould (9) which determines the outer contour of the composite fibre component (14),
h) in which a resin is introduced into the mould (9) enclosing the second reinforcing fibres (8), and the pressure in the pressure chamber (13) of the shaped article (4) at the time of the resin being supplied is higher than the first pressure value,
i) in which the temperature is increased until the resin cures and
j) a step in which the pressure is released from the shaped article (4), the mould is opened, the composite fibre component (14) is taken out of the mould (9) and the shaped article (4) is removed from the composite fibre component (14) containing the second reinforcing fibres (8).

2. Method according to claim 1, **characterised in that** at least some or all of the steps a) to j) are carried out one after the other in this order.

3. Method according to either claim 1 or claim 2, **characterised in that** an Elastomer is used as a resilient sealant.

4. Method according to claim 3, **characterised in that** silicone (3) is used as a resilient sealant.

5. Method according to any of claims 1 to 4, **characterised in that** the first and/or second reinforcing fibres (2, 8) are arranged such that they each form a fibre layer in the manner of a web or mesh.

6. Method according to any of claims 1 to 5, **characterised in that** the first reinforcing fibres (2) form respective fibre layers which are constructed from at least three individual reinforcing fibre orientations (2).

7. Method according to any of claims 1 to 6, **characterised in that** the resin is supplied at a second pressure which is lower than the pressure in the pressure chamber (13) of the shaped article (4) at the time of the resin being supplied.

8. Method according to any of claims 1 to 7, **characterised in that** the starting mould (1), the shaped article (4) and the composite fibre component (14) are given a complex geometry having a changing cross section in the longitudinal extension thereof and/or comprising one or more undercuts.

9. Method according to any of claims 1 to 8, **characterised in that** the first and/or second reinforcing fibres (2; 8) are taken from the group comprising carbon fibres, aramid fibres and glass fibres.

10. Method according to any of claims 1 to 9, **characterised in that** the resin is a thermosetting or thermoplastic resin.

11. Method according to any of claims 1 to 10, **characterised in that** the first pressure value is between 0.5 bar and 1.25 bar, preferably approximately 0.8 bar, and/or the pressure in the pressure chamber (13) when the resin is supplied is approximately 6 bar to 100 bar, preferably 35 bar.

12. Method according to any of claims 1 to 11, **characterised in that** directly before or during the step j), the pressure chamber (13) is connected to a vacuum source.

## Revendications

1. Procédé de fabrication d'un composant composite en fibres creux (14) avec des fibres de renforcement (8) noyées dans la résine, comportant les étapes individuelles suivantes :
a) dans lequel un moule initial perdu (1) est entouré par au moins une couche de premières fibres de renforcement (2) ;
b) dans lequel les premières fibres de renforcement (2) sont recouvertes de manière inséparable d'un moyen d'étanchéité élastique, afin de former un corps moulé réutilisable du type tuyau flexible (4), de telle manière que le moule initial (1) se trouve dans une chambre de pression (13) pouvant être mise sous pression du corps moulé (4) ;
c) dans lequel une conduite de moyen de pression (7) est introduite de façon étanche à au moins une ouverture restante (6) du corps moulé (4) ;
d) dans lequel le moule initial (1) est enlevé ;
e) dans lequel le corps moulé (4) est porté par pompage jusqu'à une première valeur de pression prédéterminée par une introduction d'un moyen de pression dans la chambre de pression (13) via la conduite de moyen de pression (7) ;
f) dans lequel le corps moulé mis sous pression (4) est entouré par au moins une couche de deuxièmes fibres de renforcement (8) ;
g) dans lequel le corps moulé (4) recouvert par les deuxièmes fibres de renforcement (8) est placé dans un moule en plusieurs parties (9), qui définit le contour extérieur du composant composite en fibres (14) ;
h) dans lequel une résine est introduite dans le moule (9) entourant les deuxièmes fibres de renforcement (8) et la pression dans la chambre de pression (13) du corps moulé (4) à l'instant de l'introduction de la résine est plus élevée que la première valeur de pression ;
i) dans lequel la température est augmentée jusqu'à ce que la résine durcisse, et
j) une étape, dans laquelle la pression est relâchée hors du corps moulé (4), le moule est ouvert, le composant composite en fibres (14) est retiré hors du moule (9) et le corps moulé (4) est extrait du composant composite en fibres (14) contenant les deuxièmes fibres de renforcement (8).

2. Procédé selon la revendication 1, **caractérisé en ce que** l'on exécute au moins certaines ou toutes les étapes a) à j) temporellement l'une après l'autre dans cet ordre.

3. Procédé selon la revendication 1 ou 2, **caractérisé en ce que** l'on utilise un élastomère comme moyen d'étanchéité élastique.

4. Procédé selon la revendication 3, **caractérisé en ce que** l'on utilise du silicone (3) comme moyen d'étanchéité élastique.

5. Procédé selon l'une quelconque des revendications 1 à 4, **caractérisé en ce que** les premières et/ou les deuxièmes fibres de renforcement (2, 8) sont disposées de telle manière qu'elles forment respectivement une couche de fibres à la manière d'un tissu ou d'un treillis.

6. Procédé selon l'une quelconque des revendications 1 à 5, **caractérisé en ce que** les premières fibres de renforcement (2) forment respectivement une couche de fibres, qui est constituée d'au moins trois directions différentes de fibres de renforcement (2).

7. Procédé selon l'une quelconque des revendications 1 à 6, **caractérisé en ce que** la résine est introduite avec une deuxième pression, qui est inférieure à la pression dans la chambre de pression (13) du corps moulé (4) à l'instant de l'introduction de la résine.

8. Procédé selon l'une quelconque des revendications 1 à 7, **caractérisé en ce que** le moule initial (1), le corps moulé (4) et le composant composite en fibres (14) sont amenés à une géométrie complexe avec une section transversale variable suivant leur extension longitudinale et/ou présentant une ou plusieurs contre-dépouilles.

9. Procédé selon l'une quelconque des revendications 1 à 8, **caractérisé en ce que** les premières et/ou les deuxièmes fibres de renforcement (2, 8) sont choisies dans le groupe des fibres de carbone, des fibres d'aramide et des fibres de verre.

10. Procédé selon l'une quelconque des revendications 1 à 9, **caractérisé en ce que** la résine est une résine thermodurcissable ou thermoplastique.

11. Procédé selon l'une quelconque des revendications 1 à 10, **caractérisé en ce que** la première valeur de pression se situe entre 0,5 bar et 1,25 bar, et vaut de préférence environ 0,8 bar et/ou la pression dans la chambre de pression (13) lors de l'introduction de résine vaut environ 6 bar à 100 bar, de préférence 35 bar.

12. Procédé selon l'une quelconque des revendications 1 à 11, **caractérisé en ce que** la chambre de pression (13) est raccordée à une source de vide immédiatement avant ou pendant l'étape j).
